# EUROPÄISCHE PATENTSCHRIFT

(11) **EP 0 682 048 B1**
(45) Veröffentlichungstag und Bekanntmachung des Hinweises auf die Patenterteilung: **29.07.1998**
(21) Anmeldenummer: 95106227.2
(22) Anmeldetag: 26.04.1995
(51) Int. Cl.: C08G 18/00, B22C 1/22

(54) **Wärmehärtbare Reaktionsharzgemische und deren Verwendung**
Thermosetting reactive resin mixtures and their use
Mélanges de résines réactives thermodurcissables et leur utilisation

(30) Priorität: 09.05.1994 DE 4416323
(43) Veröffentlichungstag der Anmeldung: 15.11.1995
(73) Patentinhaber: BAYER AG, 51368 Leverkusen (DE)
(72) Erfinder: Schrader, Lutz, Dr., D-47799 Krefeld (DE); Jakob, Hans-Dieter, D-51381 Leverkusen (DE); Müller, Hanns Peter, Dr., D-51519 Odenthal (DE); Niggemann, Johann, D-51373 Leverkusen (DE)

(56) Entgegenhaltungen:
- EP-A- 0 383 089
- EP-A- 0 417 600
- EP-A- 0 482 331

## Beschreibung

Die vorliegende Erfindung betrifft durch Wärmeeinwirkung zu Isocyanurat- und Oxazolidinogruppen aufweisenden Kunststoffen aushärtbare Reaktionsharzgemische aus organischen Polyisocyanaten, organischen Polyepoxiden und speziellen Beschleunigern (Katalysatoren) sowie die Verwendung solcher Harze zur Herstellung von Formkörpern aller Art und zur Herstellung von Beschichtungen und Verklebungen der unterschiedlichsten Art. Weiterhin eignen sich die erfindungsgemäßen Reaktionsharze für den Einsatz im Formenbau.

Reaktionsharzgemische aus organischen Polyisocyanaten, organischen Polyepoxiden und speziellen Katalysatoren, hergestellt durch Polyaddition von Polyepoxiden mit Polyisocyanaten unter Verwendung von Katalysatoren sind bekannt. Dabei werden insbesondere tertiäre Amine als Katalysatoren eingesetzt (siehe z.B. DE 36 00 764, DE 38 07 660, DE 36 44 382 und DE 39 04 156). Der Einsatz der bekannten Reaktionsharzmischungen, insbesondere im Formen- und Werkzeugbau, stößt jedoch in der Technik auf Schwierigkeiten, da die bekannten Beschleuniger bzw. Beschleunigersysteme, die z.B. auch in DE 38 07 660 oder DE 39 04 156 genannt sind, entweder eine zu rasche oder zu langsame Härtung der Mischungen bewirken, so daß es zum Beispiel schlecht möglich ist, bei den rasch ablaufenden Reaktionen Schrumpf, Riße und Lunkerbildung zu vermeiden. Andererseits ist es aus ökonomischen Gründen wünschenswert, daß die Umsetzungsreaktion in wirtschaftlich vernünftigen Zeiten abläuft.

Aufgabe der vorliegenden Erfindung ist es daher, wärmehärtbare Reaktionsharzgemische zur Verfügung zu stellen, die in wirtschaftlich vernünftigen Zeiten ohne allzu große Wärmeentwicklung aushärten und bei denen Schrumpf und die Bildung von Rissen und Lunkern beim Einsatz im Werkzeug- und Formenbau vermieden werden.

Überraschenderweise wurde nun gefunden, daß dies möglich ist durch die Verwendung eines Gemisches aus bestimmten tertiären Aminen als Reaktionsbeschleuniger.

Gegenstand der vorliegenden Erfindung sind daher Reaktionsharzgemische, enthaltend
a) organische Polyisocyanate,
b) Epoxidgruppen aufweisende organische Verbindungen und
c) ein Gemisch aus tertiären Aminen, bestehend aus
   i) tertiären Aminen der Formel 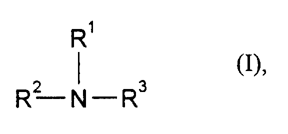 worin
      R¹ und R² für C₁-C₁₅-, bevorzugt C₁-C₈-Alkyl stehen und
      R³ C₇-C₁₅-, bevorzugt C₇-C₁₀-Aralkyl bedeutet, und/oder N-Methylmorpholin und/oder Diazadicyclooctan und
   ii) tertiären Aminen der Formel 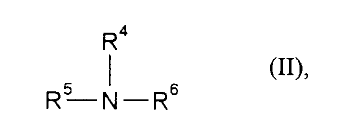 worin
      R⁴ für C₁-C₁₅-, bevorzugt C₁-C₈-Alkyl steht und
      R⁵ und R⁶ für C₇-C₁₅-, bevorzugt C₇-C₁₀-Aralkyl stehen,
   wobei das Gewichtsverhältnis der Komponenten i) zu ii) 1:99 bis 20:80 beträgt, die Komponente c) in Mengen von 0,5 bis 5 Gew.-%, bezogen auf die Komponenten a) + b), zugegen ist und pro Äquivalent an Isocyanatgruppen 0,05 bis 0,30 Äquivalente an Epoxidgruppen vorliegen.

Als Alkylreste seien genannt: Methyl, Ethyl, Propyl, Ethylhexyl, n-Octyl, bevorzugt Methyl, Octyl; als Aralkylreste: Benzyl, Phenethyl, bevorzugt Benzyl.

Bevorzugt beträgt das Verhältnis der Komponenten i) zu ii) 1:99 bis 5:95, ganz besonders bevorzugt 3:97.

Die Komponente c), das Gemisch aus tertiären Aminen, ist bevorzugt in Mengen von 0,5 bis 4 Gew.-%, bezogen auf die Komponenten a) + b), besonders bevorzugt 2 bis 4 Gew.-%, in dem Reaktionsharzgemisch enthalten. Weiterhin sind in dem erfindungsgemäßen Reaktionsharzgemisch die organischen Polyisocyanate a) und die Epoxidgruppen aufweisenden organischen Verbindungen b) in einer solchen Menge vorhanden, daß pro Äquivalent an Isocyanatgruppen bevorzugt 0,10 bis 0,30 Äquivalente an Epoxidgruppen vorliegen, besonders bevorzugt 0,15 bis 0,25 Äquivalente an Epoxidgruppen.

Als besonders geeignet hat sich bei den erfindungsgemäßen wärmehärtbaren Reaktionsharzgemischen ein Gemisch aus tertiären Aminen gezeigt, das aus Methyldibenzylamin und Dimethylbenzylamin besteht, wobei das Verhältnis von Methyldibenzylamin zu Dimethylbenzylamin 99:1 bis 95:5 beträgt.

Die erfindungsgemäßen wärmehärtbaren Reaktionsharzgemische haben eine Viskosität von 20 bis 2000 mPa.s bei 25°C.

Bei der Ausgangskomponente a) handelt es sich um beliebige organische Polyisocyanate der aus der Polyurethanchemie an sich bekannten Art. Geeignet sind beispielsweise aliphatische, cycloaliphatische, araliphatische, aromatische und heteroaromatische Polyisocyanate, wie sie z.B. von W. Siefken in Justus Liebigs Annalen der Chemie, Bd. 562, Seiten 75 bis 136, beschrieben werden, beispielsweise solche der Formel

Q(NCO)ₙ,

in der
- n =: 2 bis 4, vorzugsweise 2, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen,
bedeuten, z.B. Ethylendiisocyanat, 1,4-Tetramethylendiisocyanat, 1,6-Hexamethylendiiosocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanat-3,3 ,5-trimethyl-5-isocyanato-methyl-cyclohexan (DE-Auslegeschrift 12 02 785, US-Patentschrift 34 01 190), 2,4- und 2,6-Hexahydro-toluylendiisocyanat sowie beliebige Gemische dieser Isomeren, Hexahydro-1,3- und/oder -1,4-phenylendiisocyanat, Perhydro-2,4'- und/oder -4,4'-diphenylmethandii socyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenylpolymethylenpolyisocyanate, wie sie durch Anilin-Formaldehyd-Kondensation und anschließende Phosgenierung erhalten werden (GB 8 74 430 und GB 8 48 671), m- und p-Isocyanatophenylsulfonyl-isocyanate (US 34 54 606), perchlorierte Arylpolyisocyanate (US 32 77 138), Carbodiimidgruppen aufweisende Polyisocyanate (US 31 52 162), Norbornan-Diisocyanate (US 34 92 330), Allophanatgruppen aufweisende Polyisocyanate (GB 9 94 890), Isocyanuratgruppen aufweisende Polyisocyanate (US 30 01 973), Urethangruppen aufweisende Polyisocyanate (US 33 94 164 und 36 44 457), acylierte Harnstoffgruppen aufweisende Polyisocyanate (DE-PS 12 30 778), Biuretgruppen aufweisende Polyisocyanate (US 31 24 605, 32 01 372 und 31 24 605), durch Telomerisationsreaktionen hergestellte Polyisocyanate (US 36 54 106), Estergruppen aufweisende Polyisocyanate (US 35 67 763), Umsetzungsprodukte der obengenannten Isocyanate mit Acetalen (DE-PS 10 72 385) und polymere Fettsäureester enthaltende Polyisocyanate (US 34 55 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanato-diphenylmethan von mehr als 20 Gew.-%, vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanato-diphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-%, bezogen auf Gesamtgemisch an derartigen höherkernigen Polyisocyanaten, vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 19 23 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 32 77 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DE-OS 19 37 685 sowie in der US-PS 33 62 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe erhalten, liegt der Gehalt an 2,4'-Diisocyanatodiphenylmethan oberhalb 20 Gew.-%, bezogen auf Gesamtgemisch.

Es können aber auch zusätzlich Monoisocyanate wie z.B. Stearylisocyanat, vorzugsweise in Mengen bis zu 10 Gew.-%, bezogen auf die Mischung aus a) und b), mitverwendet werden.

Bei der Komponente b) handelt es sich um beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydrodiphenylmethan, von 4,4'-Dihydroxy-3,3'-dimethyldiphenylmethan, von 4,4'-Dihydroxydiphenylmethan, 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)-methan, den Chlorierungs- und Bromierungsprodukten der vorstehend genannten Diphenole, von Novolakken (d.h. aus Umsetzungsprodukten von ein- oder mehrwertigen Phenolen mit Aldehyden, insbesondere Formaldehyd in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 10 17 612) oder von Polyphenolen, die durch Kondensation von Phenolen und langkettigen, mindestens zwei Halogenatome enthaltenden Halogenparaffinen erhalten wurden (vgl. GB-PS 10 24 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diamino-diphenylmethan, N-Diepoxypropyl-4-amino-phenylglycidether (vgl. GB-PS 7 72 830 und 8 16 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butendiol, Glycerin, Trimethylolpropan, Pentaerythrit und Polyethylenglykolen können ebenfalls verwendet werden. Von weiterem Interesse sind Triglycidylisocyanurat, N,N-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis-(N-epoxypropyl)-anilin, N,N'-Dimethyl-N,N'-diepoxypropyl-4,4'-diamino-diphenylmethan und N-Diepoxypropyl-4-amino-phenyl-glycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2 bis 6), insbesondere 3 Mol Hexahydrophthalsäureanhydrid und einem Mol 1,1,,1-Trimethylolpropan, 3,4-Epoxycyclohexylmethan-3,4-epoxycyclohexancarboxylat.

Flüssige Polyepoxide oder niedrigviskose Diepoxide, wie Bis-(N-epoxipropyl)anilin oder Vinylcyclohexandiepoxid können in besonderen Fällen die Viskosität von bereits flüssigen Polyepoxiden weiter herabsetzen oder feste Polyepoxide in flüssige Mischungen überführen.

Geeignete Monoepoxide sind beispielsweise Phenoxypropylenoxid, Styroloxid oder Glycidalkohol.

Den erfindungsgemäßen wärmehärtbaren Reaktionsharzgemischen können zusätzlich noch Hilfs- und Zusatzstoffe, Füllstoffe sowie Verbindungen zugesetzt werden, die die Reaktion der organischen Polyisocyanate a) mit den Epoxidgruppen aufweisenden organischen Verbindungen b) zu inhibieren.

Als Hilfs- und Zusatzstoffe kommen beispielsweise solche in Frage, wie sie in DE 39 04 156 genannt werden. Besonders bevorzugt sind dabei olefinisch ungesättigte Monomere, die keine gegenüber NCO-Gruppen reaktive Wasserstoffatome aufweisen, wie Diisobutylen, Styrol, C₁-C₄-Alkylstyrole, wie α-Methylstyrol, Vinylchlorid, Vinylacetat, Acrylsäure-C₁-C₈-alkylester, wie Acrylsäuremethylester, Acrylsäurebutylester oder Acrylsäureoctylester, die entsprechenden Methacrylsäureester, Acrylnitril und/oder Diallylphthalat sowie Pfropfpolymerisate auf Basis Butadien-Styrol-Arylnitril. Vorzugsweise werden Styrol und/oder (Meth)acrylsäure-C₁-C₄-alkylester sowie Pfropfpolymerisate auf Basis Butadien-Styrol-Arylnitril verwendet.

Die genannten Hilfs- und Zusatzstoffe werden bevorzugt in Mengen von 1 bis 30 Gew.-%, bezogen auf Komponente a) + b), eingesetzt.

Als anorganische oder organische Füllstoffe, die den erfindungsgemäßen Reaktionsharzgemischen zugegeben werden können, kommen beispielsweise in Frage: Quarzmehl, Kreide oder Aluminiumoxid, Pigmente ,wie Titandioxid, Eisenoxid oder organische Pigmente, wie Phthalocyanin-Pigmente, Weichmacher, wie Dioctylphthalat, Tributyl- oder Diphenylphosphat, einbaufähige Verträglichkeitsvermittler, wie Methacrylsäure, β-Hydroxypropylester, Maleinsäure- und Fumarsäureester, lösliche Farbstoffe oder Verstärkungsmaterialien, wie Glasfasern oder Glasgewebe. Ebenfalls geeignet sind C-Fasern bzw. C-Fasergewebe und andere organische Polymerfasern, wie Aramidfasern oder LC-Polymerfasern. (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt. Die Menge der genannten Füllstoffe beträgt bevorzugt 50 bis 80 Gew.-%, bezogen auf das gefüllte Harzgemisch.

Weiterhin können den wärmehärtbaren Reaktionsharzgemischen Verbindungen zugesetzt werden, die die Reaktion der Komponente a) mit Komponente b) inhibieren. Solche inhibierend wirkenden Verbindungen werden den wärmehärtbaren Reaktionsharzgemischen immer dann zugesetzt, wenn man die wärmehärtbaren Reaktionsharzgemische in einer lagerstabilen Form verwenden will. Als die Reaktion von a) und b) inhibierende Verbindungen kommen insbesondere Alkylierungsmittel in Betracht, wie sie in DE 39 04 156 erwähnt werden. Solche Alkylierungsmittel sind insbesondere Ester organischer Sulfonsäuren, Methyliodid und/oder Dimethylsulfat. Weiterhin eignen sich als inhibierende Verbindungen Benzolsulfonsäureanhydrid, Benzolsulfonsäurechlorid, Benzolsulfonsäure, Dimethylsulfat, Trimethylsilyltrifluormethansulfonat sowie das Reaktionsprodukt der Umsetzung von Benzolsulfonsäure mit Epoxiden, bevorzugt Phenoxypropylenoxid. Die die Reaktion der Komponente a) mit Komponente b) inhibierenden Verbindungen werden bevorzugt in Mengen von 500 ppm bis 10.000 ppm, bezogen auf Komponente a) + b), eingesetzt. Selbstverständlich ist es möglich, die genannten Füllstoffe, Hilfs- und Zusatzstoffe sowie die inhibierenden Verbindungen in beliebigem Gemisch untereinander einzusetzen. Durch geeignete Vorversuche läßt sich leicht die geeigneteste Menge der genannten Additive als auch deren Mischungsverhältnis ermitteln. Die Menge und das Mischungsverhältnis hängt von dem jeweils beabsichtigten Einsatzzweck der erfindungsgemäßen Reaktionsharzgemische ab.

Wie erwähnt eignen sich die erfindungsgemäßen Reaktionsharzgemische zur Herstellung von Formkörpern aller Art. Weiterhin finden sie Verwendung als Elektroisolierstoffe, als Beschichtungen, Verklebungen und insbesondere im Formenbau.

Wir verweisen in diesem Zusammenhang auch auf den vorstehend aufgeführten Stand der Technik.

Bei der Verwendung der erfindungsgemäßen Reaktionsharzgemische kann man so vorgehen, daß man die Ausgangsmaterialien a), b), gegebenenfalls die Hilfs- und Zusatzstoffe, Füllstoffe sowie die Verbindungen, die die Reaktion der Komponenten a) mit Komponente b), inhibieren, bzw. ein Teil hiervon miteinander vermischt, das Beschleunigungssystem (Komponente c)) zugibt und die verarbeitungsfähige Mischung als Imprägnierharz oder als Gießharz in üblicher Weise einsetzt. Aushärtung der Gemische erfolgt in der Regel nach Zusatz des Beschleunigungssystems bei Temperaturen von RT bis 80°C. Die Nachhärtung der gelierten, bereits formstabilen Harzmassen erfolgt in der Regel bei Temperaturen von 100 bis 250°C, vorzugsweise bei 200°C.

Die Vorteile des erfindungsgemäßen Reaktionsharzgemisches liegen insbesondere in der nur geringen Wärmeentwicklung beim Aushärtungsprozeß, wobei Schrumpf, Riß- und Lunkerbildung vermieden wird. Weiterhin verläuft die Vernetzungsreaktion bei den erfindungsgemäßen Reaktionsharzgemischen in wirtschaftlich vernünftigen Zeiten und kann durch die Menge an Beschleunigungssystem und durch die Zusammensetzung des Beschleunigungssystems in günstiger Weise gesteuert werden. Die Steuerung der Vernetzungsreaktion und der Reaktionswärme durch das erfindungsgemäße Beschleunigungssystem c) ist als besonders überraschend anzusehen, da bereits geringe Mengen an "schnellen Katalysatoren", wie Dimethylbenzylamin, einen überproportionalen Einfluß auf das Beschleunigungsverhalten eines "langsamen" Katalysators, wie Dibenzylmethylamin (siehe hierzu die Tabelle im Beispielsteil) haben.

### Beispiel 1

In einen 200 ml Polyethylenbecher wurden 150 g des jeweiligen Harzgemisches (siehe Tabelle) gegeben und unter sorgfältigem Rühren mit der jeweils angegebenen Menge an Katalysator (Beschleunigungssystem) versetzt.

Die Gelierzeit des Reaktionsgemisches, bezogen auf die Katalysatorzugabe, wird mit einem Gelierzeitmeßgerät (Geltimer der Fa. Tecam) bestimmt. Die in der Tabelle angegebenen Werte sind Mittelwerte aus drei Bestimmungen.

Das Harzgemisch bestand aus
80 % MDI (60 % 2,4' MDI, 40 % 4,4'-MDT) (Komponente A)
20 % Bisphenol-A-diglycidylether (Komponente B)

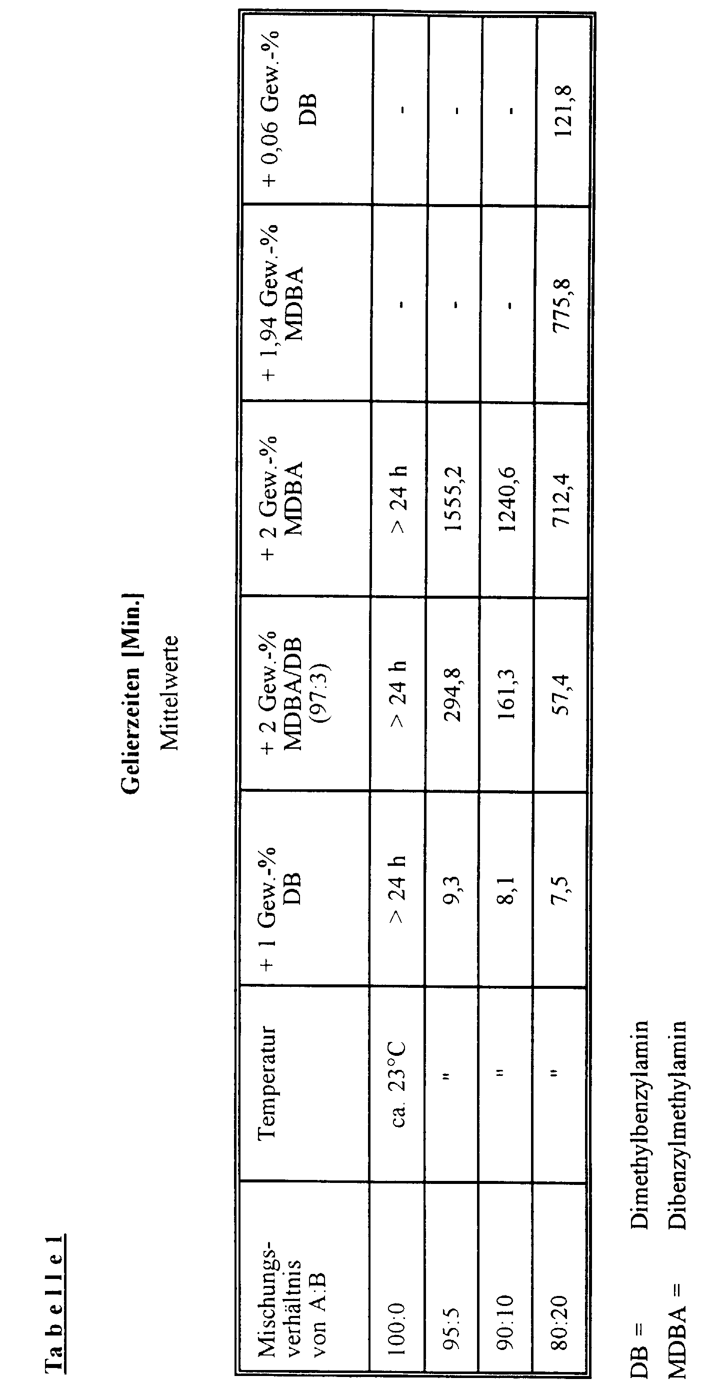

### Beispiel 2

9.200 g eines stabilisierten Harzgemisches aus 80 % Diphenylmethandiisocyanat und 20 % Bisphenol-A-diglycidylether (Blendur® VP KU 3-4516/4520 1:1) werden unter Rühren mit 13.800 g Al-Pulver und 630 g Baylith Pulver versetzt und 1 h im Vakuum aufbereitet. Danach werden unter Rühren 182 g eines Katalysatorgemisches aus Methyldibenzylamin und Dimethylbenzylamin (97:3) zugegeben, das Gemisch weitere 15 Minuten evakuiert und vorsichtig in eine Al-Form (50 cm x 20 cm x 10 cm) gegossen, die mittig mit einem Thermoelement versehen ist. 54 Minuten nach Zugabe des Katalysators betrug die exotherme Spitze 79°C.

Die Form wird im Trockenschrank 4 h auf 130°C erhitzt, entformt und der Formkörper 4 h auf 160°C und weitere 4 h auf 200°C danach noch 4 h auf 250°C erhitzt und nach Ausschalten des Trockenschrankes langsam abgekühlt.

### Beispiel 3 (Vergleichsbeispiel)

9.200 g eines stabilisierten Harzgemisches aus 80 % Diphenylmethandiisocyanat und 20 % Bisphenol-A-diglycidylether (Blendur® VP KU 3-4516/4520 1:1) werden unter Rühren mit 13.800 g Al-Pulver und 630 g Baylith Pulver versetzt und 1 h im Vakuum aufbereitet. Danach werden unter Rühren 92 g Dimethylbenzylamin zugegeben, das Gemisch weitere 5 Minuten evakuiert und vorsichtig in eine Al-Form (50 cm x 20 cm x 10 cm) gegossen, die mittig mit einem Thermoelement versehen ist. 20 Minuten nach Zugabe des Katalysators betrug die exotherme Spitze 144°C.

Die Form wird im Trockenschrank 4 h auf 130°C erhitzt, entformt und der Formkörper 4 h auf 160°C und weitere 4 h auf 200°C danach noch 4 h auf 250°C erhitzt und nach Ausschalten des Trockenschrankes langsam abgekühlt.

Nach dem Tempern zeigt der Block an den oberen Ecken Einfallstellen und seitlich Lunker.

### Beispiel 4 (Vergleichsbeispiel)

In eine Mischung bestehend aus 8.653 g Diphenylmethandiisocyanat und 456 g Bisphenol-A-diglycidylether (NCO : EP = 95:5) werden unter Rühren 13.800 g Al-Pulver und 630 g Baylith-Pulver gegeben. Die Mischung wird 1 h im Vakuum aufbereitet, danach mit 91 g Dimethylbenzylamin versetzt, weitere 5 Minuten im Vakuum gerührt und danach vorsichtig in eine Al-Form (50 cm x 20 cm x 10 cm) gegossen, die mittig mit einem Thermolement versehen ist. 36 Minuten nach der Zugabe des Katalysators betrug die exotherme Spitze 124°C.

Die Form wird im Trockenschrank 4 h auf 130°C erhitzt, entformt und der Formkörper 4 h auf 160°C und weitere 4 h auf 200°C danach noch 4 h auf 250°C erhitzt und nach Ausschalten des Trockenschrankes langsam abgekühlt.

Nach dem Tempern zeigt der Block an den oberen Ecken Einfallstellen und seitlich Lunker.

## Patentansprüche

1. Wärmehärtbare Reaktionsharzgemische, enthaltend
a) organische Polyisocyanate,
b) Epoxidgruppen aufweisende organische Verbindungen und
c) ein Gemisch aus tertiären Aminen, bestehend aus
i) tertiären Aminen der Formel 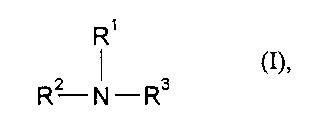 worin
R¹ und R² für C₁-C₁₅-, bevorzugt C₁-C₈-Alkyl stehen und
R³ C₇-C₁₅-, bevorzugt C₇-C₁₀-Aralkyl bedeutet,und/oder N-Methylmorpholin und/oder Diazadicyclooctan und
ii) tertiären Aminen der Formel 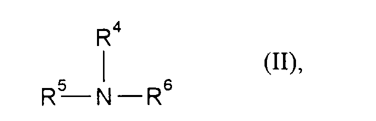 worin
R⁴ für C₁-C₁₅-, bevorzugt C₁-C₈-Alkyl steht und
R⁵ und R⁶ für C₇-C₁₅-, bevorzugt C₇-C₁₀-Aralkyl stehen,
wobei das Gewichtsverhältnis der Komponenten i) zu ii) 1:99 bis 20:80 beträgt, die Komponente c) in Mengen von 0,5 bis 5 Gew.-%, bezogen auf die Komponenten a) + b), zugegen ist und pro Äquivalent an Isocyanatgruppen 0,05 bis 0,30 Äquivalente an Epoxidgruppen vorliegen.

2. Wärmehärtbare Reaktionsharzgemische gemäß Anspruch 1, dadurch gekennzeichnet, daß sie noch zusätzlich 1 bis 30 Gew.-%, bezogen auf Komponenten a) + b), an Hilfs- und Zusatzstoffen und/oder 500 bis 10.000 ppm die Reaktion von Komponente a) mit Komponente b) inhibierenden Verbindungen enthalten.

3. Wärmehärtbare Reaktionsharzgemische nach Ansprüchen 1 bis 2, dadurch gekennzeichnet, daß sie noch 50 bis 80 Gew.-% an anorganischen und/oder organischen Füllstoffen, bezogen auf das Harzgemisch, enthalten.

4. Verwendung der Reaktionsharzgemische nach Ansprüchen 1 bis 3 als Gießharze für den Formenbau und zur Herstellung von Formkörpern aller Art.

## Claims

1. Heat-curable reaction resin mixtures containing
a) organic polyisocyanates,
b) organic compounds having epoxy rings and
c) a mixture of tertiary amines, comprising
i) tertiary amines of the formula 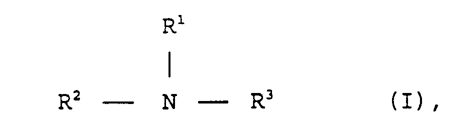 wherein
R¹ and R² represent C₁-C₁₅, preferably C₁-C₈ alkyl and
R³ signifies C₇-C₁₅, preferably C₇-C₁₀ aralkyl, and/or
N-methylmorpholine and/or diazadicyclooctane and
ii) tertiary amines of the formula 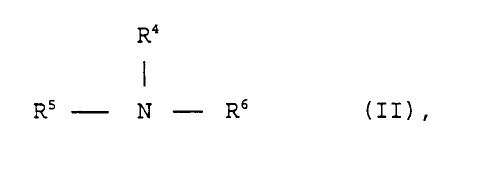 wherein
R⁴ represents C₁-C₁₅, preferably C₁-C₈ alkyl and
R⁵ and R⁶ signify C₇-C₁₅, preferably C₇-C₁₀ aralkyl,
wherein the weight ratio of the components i) to ii) is 1:99 to 20:80, the component c) is present in quantities of from 0.5 to 5 wt.%, referred to the components a) plus b), and from 0.05 to 0.30 equivalents of epoxy rings are present per equivalent of isocyanate groups.

2. Heat-curable reaction resin mixtures according to claim 1, characterised in that they contain in addition from 1 to 30 wt.%, referred to components a) plus b), of auxiliary substances and additives and/or from 500 to 10,000 ppm of compounds which inhibit the reaction of component a) with component b).

3. Heat-curable reaction resin mixtures according to claims 1 or 2, characterised in that they further contain from 50 to 80 wt.% of inorganic and/or organic fillers, referred to the resin mixture.

4. Use of the reaction resin mixtures according to claims 1 to 3 as casting resins for mould making and for the production of composites of all kinds.

## Revendications

1. Mélanges résineux réactifs thermodurcissables contenant
a) des polyisocyanates organiques,
b) des composés organiques à groupes époxydes et
c) un mélange d'amines tertiaires consistant en
i) des amines tertiaires de formule 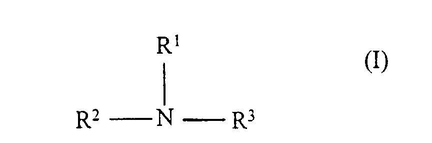 dans laquelle
R¹ et R² représentent chacun un groupe alkyle en C₁-C₁₅, de préférence en C₁-C₈ et
R³ représente un groupe aralkyle en C₇-C₁₅, de préférence en C₇-C₁₀, et/ou
la N-méthylmorpholine et/ou le diazadicyclooctane
et
ii) des amines tertiaires de formule 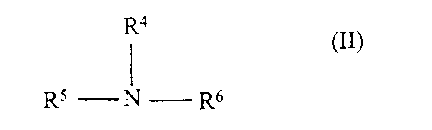 dans laquelle
R⁴ représente un groupe alkyle en C₁-C₁₅, de préférence en C₁-C₈ et
R⁵ et R⁶ représentent chacun un groupe aralkyle en C₇-C₁₅, de préférence en C₇-C₁₀,
les proportions relatives en poids entre les composants i) et ii) allant de 1:99 à 20:80, le composant c) étant présent en quantité de 0,5 à 5 % en poids par rapport aux composants a) + b), et les groupes époxydes étant présents en proportion de 0,05 à 0,30 équivalent pour un équivalent des groupes isocyanates.

2. Mélanges résineux réactifs thermodurcissables selon la revendication 1, caractérisés en ce qu'ils contiennent en outre de 1 à 30 % en poids, par rapport aux composants a) + b), de produits auxiliaires et additifs, et/ou de 500 à 10 000 ppm de composés inhibant la réaction entre le composant a) et le composant b).

3. Mélanges résineux réactifs thermodurcissables selon les revendications 1 à 2, caractérisés en ce qu'ils contiennent encore de 50 à 80 % en poids de matières de charge minérales et/ou organiques, sur leur poids total.

4. Utilisation des mélanges résineux réactifs selon les revendications 1 à 3 en tant que résines à couler pour la construction de moules et pour la fabrication d'objets moulés de tous types.
